# EUROPÄISCHE PATENTSCHRIFT

(11) **EP 2 440 822 B1**
(45) Veröffentlichungstag und Bekanntmachung des Hinweises auf die Patenterteilung: **29.05.2013**
(21) Anmeldenummer: 10723122.7
(22) Anmeldetag: 08.06.2010
(51) Int. Cl.: F16K 31/04, F16K 1/12, F16K 47/08

(54) **VENTIL**
VALVE
VANNE

(30) Priorität: 09.06.2009 DE 102009026838
(43) Veröffentlichungstag der Anmeldung: 18.04.2012
(73) Patentinhaber: Mokveld Valves B.V., 2802 AJ Gouda (NL)
(72) Erfinder: ESVELDT, Vincent, NL-4251 DR Werkendam (NL)
(74) Vertreter: Bauer, Dirk
(86) Internationale Anmeldenummer: PCT/EP2010/058005
(87) Internationale Veröffentlichungsnummer: WO 2010/142677

(56) Entgegenhaltungen:
- EP-A1- 1 736 693
- DE-A1- 3 933 169
- DE-A1- 4 214 814
- DE-A1-102007 037 995
- DE-B3-102007 007 664
- DE-U1- 20 115 470

## Beschreibung

Die Erfindung betrifft ein Ventil mit einem Gehäuse, das eine Einlassöffnung für ein Fluid, ein Verschlusselement, mittels dessen ein Fluss des Fluids steuerbar ist, und eine Auslassöffnung für das Fluid aufweist, sowie mit einer Stellvorrichtung, die einen elektrischen Stellantrieb zum Einstellen eines Verschlussquerschnitts des Verschlusselements aufweist, und mit einem Antriebsgehäuse, mit dem ein Stator des Stellantriebs fest verbunden ist, wobei in einem Innenraum des Antriebsgehäuses, der unter einem Druck des Fluids steht, ein beweglicher Läufer des Stellantriebs mit dem Verschlusselement kinematisch gekoppelt und der Stator innerhalb des Innenraums angeordnet ist.

DE 42 14 814 A1 offenbart ein solches Durchflussregelventil für einen Heizkreislauf eines Kraftfahrzeugs, dessen Stellantrieb in dem strömenden Heizmittel angeordnet ist. Durch den innen liegenden Stellantrieb weist dieses Ventil zudem eine sehr kompakte Bauform auf.

Absperr- und Drosselventile sind im Umfeld der Erfindung in einer Vielzahl von Bauformen als Axial-, Axialkegel- oder Ringkolbenventil, als Hub- oder Hubkegelventil ("globe valve"), als Schieber- und Absperrschieberventil, Kugelhahnventil oder Butterfly-Ventil, beispielsweise aus dem Programm der Anmelderin allgemein bekannt. Durch axiale oder rotierende Lageänderung des Verschlusselements - eines Kolben, einer Kugel, einer Platte oder eines Kegels - wird über den Verschlussquerschnitt des Ventils der Fluss des druckbeaufschlagten Fluids eingestellt und geregelt.

Bekannte Absperr- und Drosselventile mit elektromotorisch einstellbarem Verschlussquerschnitt werden aufgrund der im eingebauten Zustand guten Zugänglichkeit zum Austausch von Verschleißteilen sowie aufgrund des mechanisch vergleichsweise einfachen Einstellmechanismus traditionell oft in Winkelbauweise ("angle type valve"), also mit senkrecht zur Achse des kolbenförmigen Verschlusselementes und zur Auslassrichtung einströmendem Fluid konzipiert.

Zunehmend kommen in jüngerer Zeit - insbesondere wo eine Umlenkung der Strömungsrichtung unerwünscht ist- auch Drosselventile in Axialbauweise ("Ringkolbenventil"), also mit koaxial zur Ein- und Auslassrichtung verschiebbarem Verschlusselement zum Einsatz. Diese weisen zudem bei gleichen strömungstechnischen Parametern geringere äußere Abmessungen und aufgrund der koaxialen Bauweise eine geringere Materialbelastung durch das strömende Fluid und damit einen verminderten Verschleiß auf.

In bekannten Absperr- und Drosselventilen kommen als Stellantriebe Drehankermotoren (auch: "Torque-" oder "Drehmomentmotoren") mit rotierendem Läufer ("Rotor") zum Einsatz. Die Rotationsbewegung des Läufers wird über aufeinander gleitende Bewegungsgewinde - nach dem Prinzip von Schraube und Mutter - in eine Linearbewegung umgesetzt. Das linear bewegte Bauteil ist entweder eine unmittelbar mit dem Verschlusselement verbundene Spindel, oder - zum Beispiel bei Axialbauweise - eine Schaltspindel. Bei Axialbauweise sind Schaltspindel und Spindel jeweils mit ineinander greifenden Schrägverzahnungen versehen, die eine Umlenkung der Linearbewegung ermöglichen.

Aus EP 0 937 928 A1 ist ein Drosselventil in Winkelbauweise bekannt, an dem Stator und Läufer des elektrischen Stellantriebs durch eine Trennwand getrennt sind, die insbesondere die elektrischen Anschlüsse des Stellantriebs hermetisch gegenüber einem inneren Bereich des Ventils und dem Einfluss des durch das Drosselventil strömenden Fluids abschirmt. Die Antriebskraft wird durch die Trennwand hindurch auf den Läufer übertragen.

DE 39 33 169 A1 offenbart ein Drosselventil in Axialbauweise, an dem der elektrische Stellantrieb in einer separaten Kammer von dem Fluid hermetisch und druckdicht abgeschirmt ist. Aus der Kammer dringt lediglich eine von dem Stellantrieb angetriebene, mit einem Bewegungsgewinde versehene Welle in den inneren Bereich des Drosselventils und treibt das kolbenförmige Verschlusselement an.

DE 100 58 441 A1 offenbart ein Konzept für ein Drosselventil in Winkelbauweise, wobei der Stellantrieb in einem separaten, hermetisch abgedichteten Gehäuse von Außen an den Ventilkörper angeflanscht ist und wiederum lediglich die mit dem Bewegungsgewinde versehene Welle in den inneren Bereich des Drosselventils dringt. Auch in diesem Ventil sind Stator und Läufer durch eine Trennwand getrennt.

Bei der Öl- und Gasförderung, in der chemischen Industrie und auch in anderen Industriezweigen steigen zugunsten von Sicherheit und Umweltschutz die Anforderungen an Leckagefreiheit. Die Leckage toxischer Fluide muss grundsätzlich verhindert, zumindest aber im Rahmen der technischen Möglichkeiten minimiert werden. Bei Absperr- und Drosselventilen steht hier insbesondere die dichte Führung von Schaltspindeln im Blickpunkt.

Im Rahmen der Offshore-Förderung von Öl und Gas werden zunehmend Verarbeitungsschritte - beispielsweise die Kompression des geförderten Gases - unmittelbar an die Förderstelle am Meeresgrund verlegt. Mit dieser Tendenz geht ein erhöhter Bedarf an für den Untersee-Einsatz geeigneten Komponenten wie Ventilen einher:

Diese Komponenten müssen nicht nur aus Umweltschutzgründen emissionsfrei sein, also eine Abschirmung des strömenden Fluids (Öl, Gas) von dem umgebenden Seewasser gewährleisten und einen Austritt des Fluids in die Umgebung verhindern. Darüber hinaus ist auch ein Eindringen des hochgradig korrosiven und mit Mikroorganismen befrachteten Seewassers in das Ventil selbst oder in die Stellvorrichtung unter allen Umständen zu vermeiden. Zuletzt ist auch jeder Kontakt insbesondere der Elektronik und der mechanischen Bauteile der Stellvorrichtung mit dem geförderten Fluid, das aufgrund von Verunreinigung mit abrasiven und korrosiven Komponenten wie Sand, Rost und insbesondere mit Schwefelwasserstoff gleichfalls sehr aggressiv sein kann, unerwünscht.

Diese Abschirmung der spannungsführenden Teile der Stellvorrichtung sowohl von dem strömenden Fluid als auch von der Umgebung einerseits und andererseits die Beständigkeit gegenüber den am Meeresgrund vorherrschenden Druckverhältnissen sind mit den Konzepten der bekannten Ventile nur durch verstärkte - also dickere - Trennwände zwischen dem Stellantrieb und der Umgebung, dem Stellantrieb und dem inneren Bereich des Ventils oder zwischen Stator und Läufer des Stellantriebs zu erzielen. Im letzteren Fall vermindert jede Vergrößerung des Spalts zwischen Stator und Läufer den Wirkungsgrad des Stellantriebs.

Andererseits wird mit dem Ventil nach der DE 42 14 814 A1 keine Abdichtung der mechanischen Bauteile der Stellvorrichtung gegen Verunreinigungen erzielt.

### Aufgabe

Der Erfindung liegt die Aufgabe zugrunde, ein Ventil mit im Fluid liegenden Stellantrieb für Fluide mit abrasiven und korrosiven Komponenten zu nutzen.

### Lösung

Ausgehend von den bekannten Ventilen wird nach der Erfindung vorgeschlagen, dass der Innenraum des Antriebsgehäuses mittels eines beweglichen Trennelements von dem Fluid getrennt ist. So wird ein Eindringen des Fluids in die Stellvorrichtung, insbesondere zwischen Stator und Läufer des Stellantriebs wirksam vermieden. Durch die Verschiebung des Trennelements werden Volumenänderungen im Innenraum kompensiert. Solche Volumenänderungen werden zum Beispiel durch die Verschiebung der Spindel, durch Temperaturänderungen oder durch Leckage der dynamischen Dichtungen zwischen dem Innenraum und dem Fluid hervorgerufen. Die Verwendung eines druckfesten, je nach Anwendung auch medienbeständigen Stators und entsprechender elektrischer Anschlüsse erlaubt den Verzicht auf eine Trennwand zwischen Stator und Läufer und ermöglicht dadurch gerade für den Einsatz unter hohem Druck einen signifikant erhöhten Wirkungsgrad des Stellantriebs.

Bevorzugt ist an einem erfindungsgemäßen Ventil das Verschlusselement mittels des Stellantriebs in dem Antriebsgehäuse axial verschiebbar. Solche erfindungsgemäßen Ventile sind beispielsweise Drossel- oder Absperrventile mit axial (in einem Käfig) verschiebbarem Kolben und Schieberventile. Weil der Druck des Fluids an beiden Enden der Spindel wirksam ist, ist die Spindel in der Bewegungsrichtung völlig druckentlastet.

Alternativ kann an einem erfindungsgemäßen Ventil das Verschlusselement mittels des Stellantriebs rotiert werden. Derartige erfindungsgemäße 90°-Ventile sind beispielsweise Kugelhahn- oder Butterfly-Ventile.

An einem erfindungsgemäßen Ventil entspricht vorzugsweise eine Einlassrichtung des Fluids in die Einlassöffnung einer Auslassrichtung des Fluids aus der Anslassöffnung und das Verschlusselement ist koaxial zu der Einlassrichtung und der Auslassrichtung verschiebbar. Ein solches erfindungsgemäßes Ventil in Axialbauweise zeichnet sich durch eine geringe Materialbelastung durch das strömende Fluid aus. Die Stellvorrichtung, insbesondere das Antriebsgehäuse mit dem Stellantrieb eines solchen erfindungsgemäßen Ventils ist dann geschützt innerhalb des Gehäuses des Ventils angeordnet.

Alternativ kann ein erfindungsgemäßes Ventil auch in Winkelbauweise hergestellt sein. Der Stellantrieb ist dann vorzugsweise für Wartungsarbeiten gut zugänglich von außen in dem Gehäuse angebracht.

Bevorzugt ist in einem erfindungsgemäßen Ventil das Trennelement ein in einem Ausgleichszylinder frei beweglicher Ausgleichskolben oder ein Faltenbalg. Die Verschiebung des Ausgleichskolbens oder des Faltenbalgs kompensiert in einem solchen erfindungsgemäßen Ventil Volumenänderungen im Innenraum.

Vorzugsweise ist an einem solchen erfindungsgemäßen Ventil der Ausgleichszylinder in einer Wandung des Gehäuses angeordnet. Ein solches erfindungsgemäßes Drosselventil weist einen besonders einfachen Aufbau auf. Alternativ kann der Ausgleichszylinder Teil des Antriebsgehäuses sein und der Ausgleichskolben oder der Faltenbalg beispielsweise eine mit dem Verschlusselement verbundene Spindel axial umschließen.

Besonders bevorzugt ist der Innenraum an einem erfindungsgemäßen Ventil mit einer Flüssigkeit gefüllt. Die inkompressible Füllung des Innenraums vereinfacht die Auslegung des erfindungsgemäßen Ventils für wechselnde Druckverhältnisse. Die Flüssigkeit kann ein Schmiermittel sein: So werden die bewegten Teile der Stellvorrichtung, insbesondere ein Getriebe zwischen Läufer und Spindel geschmiert. Bei Verwendung selbstschmierender Komponenten kann die Flüssigkeit beispielsweise auch Wasser sein. Andererseits ist durch die Flüssigkeit der Stellantrieb explosionsgeschützt. Das Trennelement vermeidet eine Kontaminierung der Flüssigkeit mit dem Fluid und umgekehrt.

Die Flüssigkeit im Innenraum unterstützt die Wärmeabfuhr von dem Stellantrieb, insbesondere von dessen Stator. Sie kann durch entsprechende Kanäle von der Außenseite in den Innenraum eines erfindungsgemäßen Ventils eingebracht, in regelmäßigen Intervallen gewechselt oder auch kontinuierlich im Umlauf gefiltert werden. Eine Sichtkontrolle (oder eine automatisierte physikalische oder chemische Prüfung) des Zustands der Flüssigkeit ermöglicht die Überwachung des Verschleißzustands des erfindungsgemäßen Ventils im laufenden Betrieb.

In einem erfindungsgemäßen Ventil kann insbesondere der Läufer ein rotierbarer Rotor sein, wobei ein Getriebe eine Rotationsbewegung des Läufers in eine Translationsbewegung einer mit dem Verschlusselement verbundenen Spindel umsetzt. Ein solches Ventil mit einem Drehankermotor als Stellantrieb kann besonders preisgünstig hergestellt werden, da derartige Stellantriebe - auch als Schrittmotoren - in einer Vielzahl von Ausführungen als Massenartikel am Markt verfügbar sind. Alternativ kann der Stellantrieb ein Linearmotor - auch als Schrittmotor - sein, der ggf. über eine Spindel ohne Getriebe das Verschlusselement unmittelbar antreibt. Die Stellvorrichtung eines solchen erfindungsgemäßen Ventils weist eine besonders geringe Baugröße auf.

In einem solchen erfindungsgemäßen Ventil mit einem flüssigkeitsgefüllten Innenraum durchströmt vorzugsweise die Flüssigkeit während der Translationsbewegung der Spindel das Getriebe. So ist einerseits eine gute Schmierung des Getriebes gewährleistet, andererseits ist der fertigungstechnische Aufwand durch die mehrfache Nutzung vorhandener Hohlräume verringert. Alternativ oder ergänzend kann die Flüssigkeit auch durch kleine Bohrungen im Gehäuse geführt werden.

Vorteilhafter Weise ist in einem erfindungsgemäßen Ventil mit Drehankermotor das Getriebe ein Wälzkörper-Gewindetrieb. Wälzkörper-Gewindetriebe sind insbesondere aus Verwendungen an Metallbearbeitungsmaschinen bekannte Getriebe: Zur Übersetzung zwischen Rotations- und Translationsbewegung kommen Kugeln oder Gewindestangen ("Rollen") zum Einsatz, die zumindest auf dem translatorisch bewegten Bauteil abrollen. Der im Vergleich zur Gleitreibung zwischen Gewinden erheblich geringere Rollwiderstand der abrollenden Elemente ermöglicht eine sehr verlustarme Übersetzung. Die Wirkungsgrade von Rollen- und Kugelgewindetrieben sind im Wesentlichen vergleichbar. Rollengewindetriebe ("roller screw") bauen einerseits deutlich kompakter als Kugelgewindetriebe und ermöglichen andererseits sowohl eine Übersetzung von Translation auf Rotation als auch umgekehrt.

Alternativ kann in einem erfindungsgemäßen Ventil das Getriebe ein Bewegungsgewinde auf einer mit dem Verschlusselement verbundenen Spindel mit dem Läufer als Mutter sein. Gegenüber einem Wälzkörper-Gewindetrieb ist ein Bewegungsgewinde zwar mit höheren Verlusten behaftet, aber wesentlich günstiger zu fertigen. Bei Energieausfall verharrt der Kolben eines solchen erfindungsgemäßen Ventils in seiner jeweiligen Position.

Bevorzugt weist ein erfindungsgemäßes Ventil eine Sicherungseinrichtung auf, die bei Ausfall der Spannungsversorgung das Verschlusselement in eine Sicherungsposition bewegt. Ein solches erfindungsgemäßes Ventil ermöglicht einen sicheren Betrieb auch bei Ausfall der Spannungsversorgung.

Besonders bevorzugt ist in einem solchen erfindungsgemäßen Ventil die Sicherungseinrichtung ein elektrisches System. Ein erfindungsgemäßes Ventil kann eine Notstromversorgung, insbesondere durch eine Batterie oder einen Kondensator aufweisen. Ein solches erfindungsgemäßes Ventil ermöglicht einerseits die Überbrückung von Spannungsausfällen ohne Einnahme einer Sicherungsposition und andererseits die Definition je nach Einsatzfall unterschiedlicher Sicherungspositionen.

Alternativ ist die Sicherungseinrichtung eine Rückstellfeder. An einem solchen erfindungsgemäßen Ventil kann in der Sicherungsposition des Verschlusselements der Drosselquerschnitt maximal geöffnet sein. Ein solches erfindungsgemäßes Ventil ist beispielsweise als Pumpverhütungsventil im Bypass zwischen Ein- und Auslass eines Kompressors einsetzbar. Alternativ kann der Drosselquerschnitt in der Grundstellung des Verschlusselements je nach Anforderungen im Einzelfall vollständig geschlossen oder bei einer elektrisch angetriebenen Sicherungseinrichtung in einer beliebigen definierten Zwischenstellung vorgesehen werden.

An einem erfindungsgemäßen Ventil mit flüssigkeitsgefülltem Innenraum kann die Sicherungseinrichtung auch von Außen an dem Wartungskanal angebracht sein und - beispielsweise über einen hydro-pneumatischen Druckspeicher - im Fehlerfall automatisch den Innenraum mit der Flüssigkeit unter Überdruck setzen und so das Verschlusselement in die Sicherungsposition verschieben.

In einer besonders vorteilhaften Ausführung weist ein erfindungsgemäßes Ventil eine Positionsanzeige auf, die eine Position des Verschlusselements meldet. Die Position des Verschlusselements in dem Ventil - beispielsweise eines Kolben im Drosselkäfig - ist ein unmittelbares Maß für den Verschlussquerschnitt und eine aussagekräftige Kenngröße für eine Betriebsstellung des Ventils. Ein erfindungsgemäßes Ventil kann beispielsweise mittels eines Permanentmagneten und eines elektromagnetischen Gebers an einem der axial oder rotatorisch bewegten Bauteile berührungslos die Positionsanzeige ansteuern.

Vorteilhafter Weise ist weiterhin der Stellantrieb eines erfindungsgemäßen Ventils korrosionsbeständig. Ein solches erfindungsgemäßes Ventil stellt geringere Anforderungen an die Umgebung des Stellantriebs und ermöglicht eine Verlängerung der Wartungsintervalle.

Der Stellantrieb eines solchen erfindungsgemäßen Ventils erfüllt insbesondere bevorzugt die NACE- und ISO-Standards für Korrosionsschutz in der Öl- und Gasindustrie. Auch bei Leckage zwischen dem Innenraum und dem Fluid, insbesondere bei in den Innenraum eindringendem Fluid wird so eine Beschädigung des Stellantriebs vermieden. Beispielsweise können hierzu die spannungsführenden und magnetischen Bauelemente des Stellantriebs in einen synthetischen Werkstoff eingebettet sein.

Ein erfindungsgemäßes Ventil kann - zur Verbesserung der Betriebssicherheit - einen redundanten Stator des Stellantriebs und/oder redundante elektrische und elektronische Baugruppen aufweisen.

Erfindungsgemäße Ventile erleichtern die Handhabung insbesondere toxischer- also für Umwelt, Menschen oder das Klima gefährlicher - Fluide nicht nur in der Öl- und Gasförderung in der Tiefsee, sondern beispielsweise auch in der Petrochemie, in Nuklearanlagen sowie in der medizinischen und pharmazeutischen Technik, beispielsweise bei der Hormonherstellung: Die vollständige Integration des Stellantriebs in den druckbeaufschlagten Innenraum des Ventils erhöht die Sicherheit gegenüber Leckagen und gestattet die signifikante Verlängerung von Wartungs- und Austauschintervallen.

### Ausführungsbeispiel

Die Erfindung wird nachfolgend anhand zweier Ausführungsbeispiele erläutert. Es zeigen
- Fig. 1: ein erfindungsgemäßes Ventil im Schnitt,
- Fig. 2: die Stellvorrichtung des Ventil im Schnitt,
- Fig. 3: ein Detail der Stellvorrichtung,
- Fig. 4: ein zweites erfindungsgemäßes Ventil und
- Fig. 5: die Stellvorrichtung des zweiten Ventils.

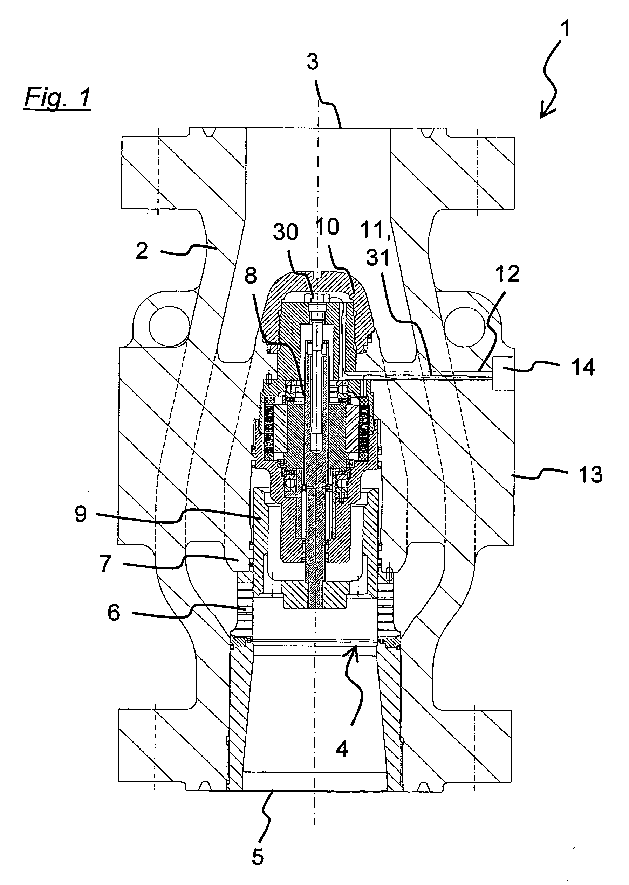

Das in Figur 1 gezeigte erfindungsgemäße Ventil 1 ist ein Drosselventil in einer nahezu vollständig geöffneten Position. Es weist ein Gehäuse 2 mit einer Einlassöffnung 3 für ein nicht dargestelltes Fluid unter einem ersten Druckniveau, eine Drossel 4 zum Drosseln auf ein zweites Druckniveau und eine Auslassöffnung 5 für das gedrosselte Fluid auf. Das Ventil 1 kann auch mit entgegengesetzter Durchflussrichtung - von der Auslassöffnung 5 zu der Einlassöffnung 3 - betrieben werden.

Die Drossel 4 ist als rohrförmiger Drosselkäfig 6 zwischen einem mit dem Gehäuse 2 verbundenen rohrförmigen Innenkörper 7 in dem Strömungsweg des Fluids und der Auslassöffnung 5 ausgeführt. In dem Drosselkäfig 6 ist mittels einer elektrischen Stellvorrichtung 8 ein kolbenförmiges Verschlusselement 9 axial verschiebbar. Zur Einlassöffnung 3 ist der Innenkörper 7 mit einer auf die Stellvorrichtung 8 aufgeschraubten Prallkappe 10 verschlossen.

Die Anschlussleitung 11 der Stellvorrichtung 8 ist durch einen Leitungskanal 12 aus dem Innenkörper 7 zur Außenseite 13 des Gehäuses 2 geführt. Der Leitungskanal ist mit einem Abschlussstopfen 14, der nicht dargestellte elektrische Anschlüsse für die Stellvorrichtung 8 aufweist, druckdicht verschlossen.

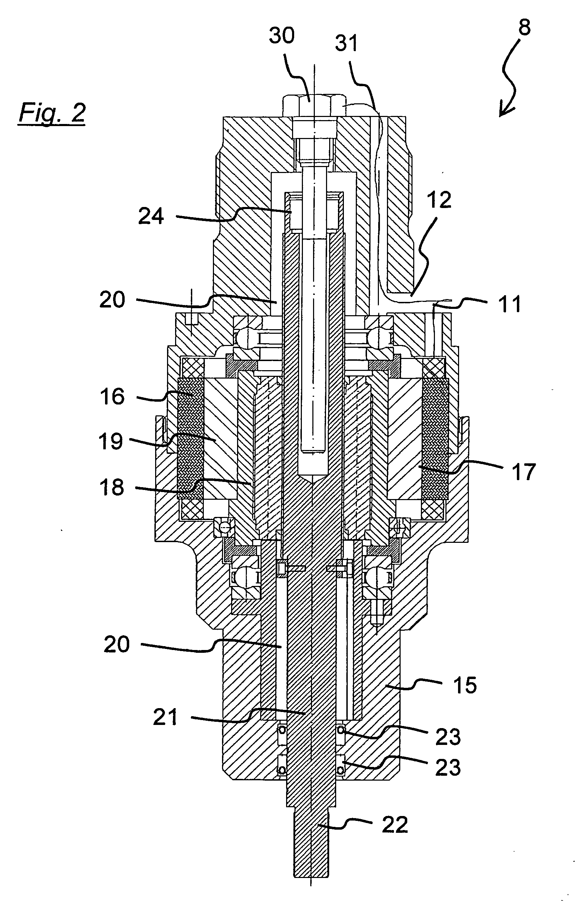

Die in Figur 2 im Detail dargestellte Stellvorrichtung 8 weist ein zweiteiliges, zusammengeschraubtes Antriebsgehäuse 15 auf. In dem Antriebsgehäuse 15 ist der Stator 16 eines als Stellantrieb 17 verwendeten elektrischen Drehankermotors fest verankert und ein nur schematisch dargestellter Wälzkörper-Gewindetrieb 18 - ein "Rollengewindetrieb" - radial und axial gelagert. Mit dem Wälzkörper-Gewindetrieb 18 ist der Läufer 19 ("Rotor") des Stellantriebs 17 verdrehfest verbunden.

Der Wälzkörper-Gewindetrieb 18 im Innenraum 20 des Antriebsgehäuses 15 setzt die Rotation des Läufers 19 in eine axiale Translation einer Spindel 21 um, deren Ende 22 in Dichtungen 23 abgedichtet aus dem Antriebsgehäuse 15 dringt und mit dem Verschlusselement 9 verschraubt ist. Der Innenraum 20 ist mit einem nicht dargestellten flüssigen Schmiermittel unter dem zweiten Druckniveau gefüllt.

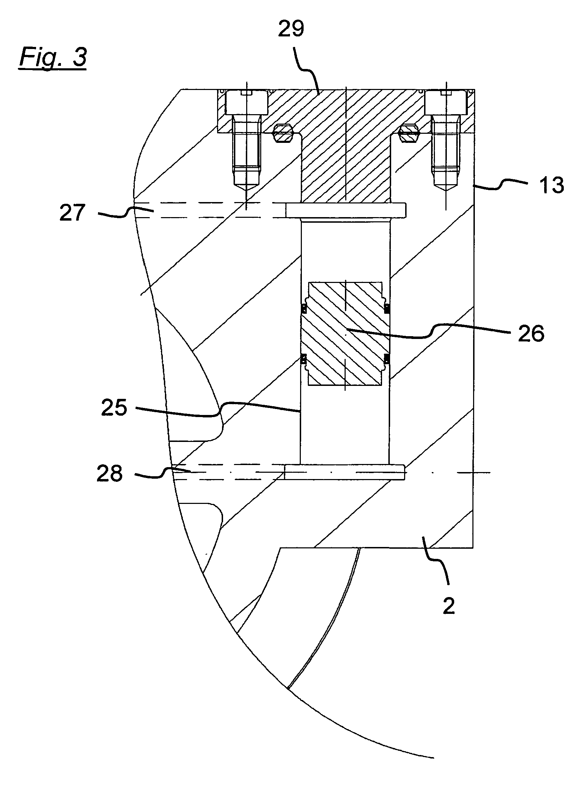

Wie in Figur 3 dargestellt weist das Gehäuse 2 in einer Wandung einen Ausgleichszylinder 25 mit einem axial frei beweglichen Ausgleichskolben als Trennelement 26 auf. Der Ausgleichszylinder 25 ist durch einen ersten Kanal 27 mit dem Schmiermittel, durch einen zweiten Kanal 28 mit dem Fluid beaufschlagt und überträgt den Auslassdruck des Fluids auf das Schmiermittel. Der Ausgleichszylinder 25 ist zur Außenseite 13 des Gehäuses 2 mit einem verschraubten Stopfen 29 verschlossen.

Das dem Verschlusselement 9 abgewandte Ende 24 der Spindel 21 ist von dem Schmiermittel umspült. Beim Schließen des Ventils 1 wird Schmiermittel aus dem Ausgleichszylinder 25 durch den ersten Kanal 27 zu dem abgewandten Ende 24 angesaugt. Hierdurch verschiebt sich entsprechend das Trennelement 26 in dem Ausgleichszylinder 25 und saugt durch den zweiten Kanal 28 das Fluid in den Ausgleichzylinder 25.

Beim Öffnen des Ventils 1 verdrängt umgekehrt das dem Verschlusselement 9 abgewandte Ende 24 der Spindel 21 das Schmiermittel aus dem Innenraum 20 und durch den ersten Kanal 27 in den Ausgleichszylinder 25 hinein. Das Trennelement 26 verdrängt entsprechend das Fluid durch den zweiten Kanal 28 aus dem Ausgleichszylinder 25 heraus.

Das erfindungsgemäße Ventil 1 weist eine nicht dargestellte Rückstellfeder als Sicherungseinrichtung und eine elektromagnetische Positionsanzeige 30 auf, die die jeweilige Position des Verschlusselements 9 über eine wiederum durch den Leitungskanal 12 geführte Anschlussleitung 31 in dem Abschlussstopfen 14 an ein nicht dargestelltes Überwachungsmodul meldet.

Der Stellantrieb 17 und der Wälzkörper-Gewindetrieb 18 des Ventils 1 können korrosionsbeständig sein, auch nach NACE und ISO-Standards für Korrosionssschutz in der Öl- und Gasindustrie.

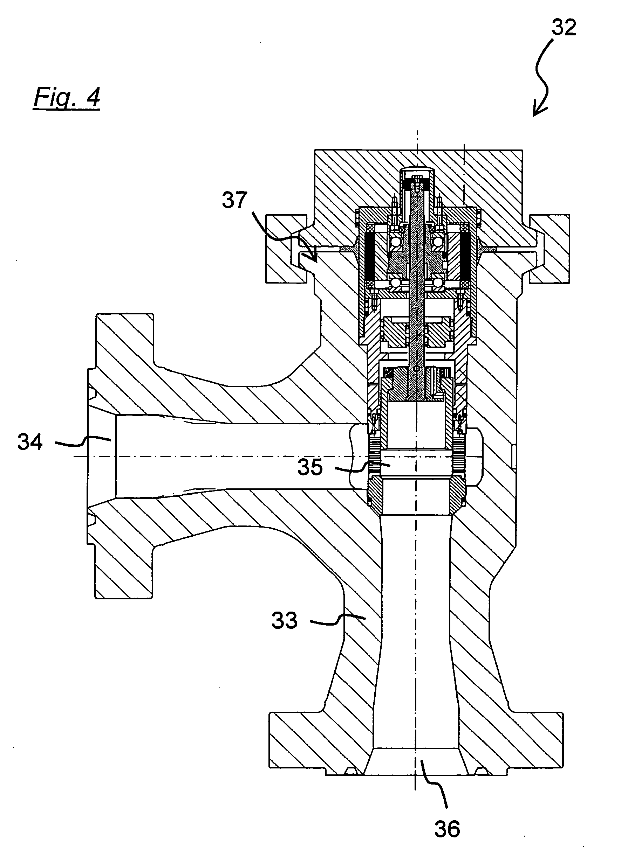

Figur 4 zeigt ein zweites erfindungsgemäßes Ventil 32 - ein Drosselventil in Winkelbauweise wiederum in nahezu vollständig geöffneter Position. Das zweite Ventil 32 weist wie das erste Ventil 1 ein Gehäuse 33 mit einer Einlassöffnung 34 für ein nicht dargestelltes Fluid unter einem ersten Druckniveau (dem "Einlassdruck"), eine Drossel 35 zum Drosseln auf ein zweites Druckniveau (einen "Auslassdruck") und eine Auslassöffnung 36 für das gedrosselte Fluid auf.

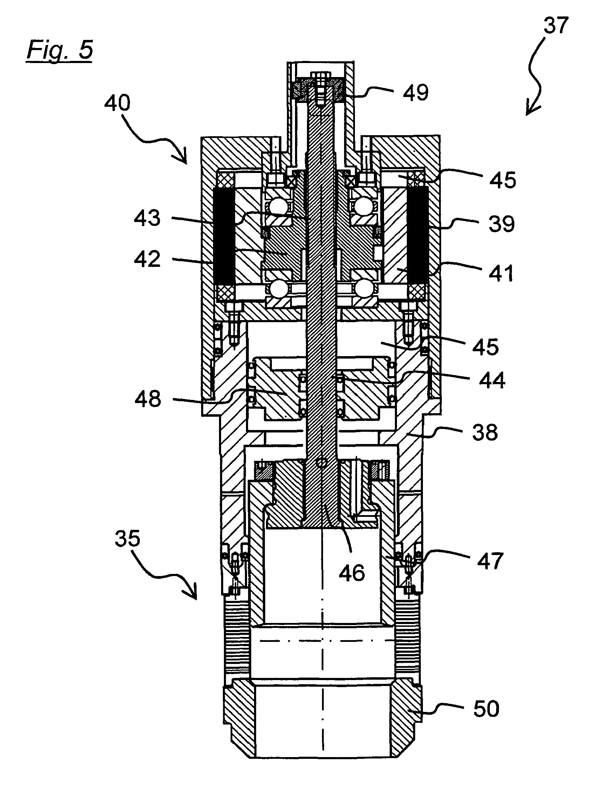

Die in Figur 5 im Detail dargestellte Stellvorrichtung 37 des zweiten erfindungsgemäßen Ventils 32 weist ein zweiteiliges, zusammengeschraubtes Antriebsgehäuse 38 auf. In dem Antriebsgehäuse 38 ist der Stator 39 eines als Stellantrieb 40 verwendeten elektrischen Drehankermotors fest verankert. Ein Läufer 41 des Stellantriebs 40 ist mit einer Mutter 42 verdrehfest verbunden. Die Mutter 42 läuft auf einem Bewegungsgewinde 43 einer Spindel 44.

Der Mutter 42 im Innenraum 45 des Antriebsgehäuses 38 setzt die Rotation des Läufers 41 in eine axiale Translation einer Spindel 44 um, deren Ende 46 abgedichtet aus dem Antriebsgehäuse 3 8 dringt und mit einem kolbenförmigen Verschlusselement 47 verschraubt ist. Der Innenraum 45 ist mit einem flüssigen Schmiermittel unter dem zweiten Druckniveau gefüllt.

Zwischen der Mutter 42 und dem Verschlusselement 47 ist auf der Spindel 44 ein axial frei beweglicher Ausgleichskolben als Trennelement 48 aufgesetzt, der einerseits den Innenraum 45 des Stellantriebs 40 von dem Fluid stofflich isoliert, andererseits den Druck des Fluids auf den Innenraum 45 und das Schmiermittel überträgt. Auch in dem zweiten Ventil 32 ist das dem Verschlusselement 47 abgewandte Ende 49 in dem Innenraum 45 vollständig von dem Schmiermittel umspült.

Die Stellvorrichtung 37 kann als zusammenhängende Baugruppe ausgeführt sein, die auch beim Einsatz am Meeresboden an dem montiertem Ventil 32 in einem Arbeitsgang austauschbar ist.

In den Figuren sind

| | |
|---|---|
| 1 | Ventil |
| 2 | Gehäuse |
| 3 | Einlassöffnung |
| 4 | Drossel |
| 5 | Auslassöffnung |
| 6 | Drosselkäfig |
| 7 | Innenkörper |
| 8 | Stellvorrichtung |
| 9 | Verschlusselement |
| 10 | Prallkappe |
| 11 | Anschlussleitung |
| 12 | Leitungskanal |
| 13 | Außenseite |
| 14 | Abschlussstopfen |
| 15 | Antriebsgehäuse |
| 16 | Stator |
| 17 | Stellantrieb |
| 18 | Wälzkörper-Gewindetrieb |
| 19 | Läufer |
| 20 | Innenraum |
| 21 | Spindel |
| 22 | Ende |
| 23 | Dichtung |
| 24 | Ende |
| 25 | Ausgleichszylinder |
| 26 | Trennelement |
| 27 | Kanal |
| 28 | Kanal |
| 29 | Stopfen |
| 30 | Positionsanzeige |
| 31 | Anschlussleitung |
| 32 | Ventil |
| 33 | Gehäuse |
| 34 | Einlassöffnung |
| 35 | Drossel |
| 36 | Auslassöffnung |
| 37 | Stellvorrichtung |
| 38 | Antriebsgehäuse |
| 39 | Stator |
| 40 | Stellantrieb |
| 41 | Läufer |
| 42 | Mutter |
| 43 | Bewegungsgewinde |
| 44 | Spindel |
| 45 | Innenraum |
| 46 | Ende |
| 47 | Verschlusselement |
| 48 | Trennelement |
| 49 | Ende |
| 50 | Endring |

## Patentansprüche

1. Ventil (1, 32) mit einem Gehäuse (2, 33), das eine Einlassöffnung (3, 34) für ein Fluid, ein Verschlusselement (9, 47), mittels dessen ein Fluss des Fluids steuerbar ist, und eine Auslassöffnung (5, 36) für das Fluid aufweist, sowie mit einer Stellvorrichtung (8, 37), die einen elektrischen Stellantrieb (17, 40) zum Einstellen eines Verschlussquerschnitts des Verschlusselements (9, 47) aufweist, und mit einem Antriebsgehäuse (15, 38), mit dem ein Stator (16, 39) des Stellantriebs (17, 40) fest verbunden ist, wobei in einem Innenraum (20, 45) des Antriebsgehäuses (15, 38), der unter einem Druck des Fluids steht, ein beweglicher Läufer (19, 41) des Stellantriebs (17, 40) mit dem Verschlusselement (9, 47) kinematisch gekoppelt und der Stator (16, 39) in dem Innenraum (20, 45) angeordnet ist, ***dadurch gekennzeichnet, dass*** der Innenraum (20, 45) des Antriebsgehäuses (15, 38) mittels eines beweglichen Trennelements (26, 48) von dem Fluid getrennt ist.

2. Ventil (1, 32) nach dem vorgenannten Anspruch, ***dadurch gekennzeichnet, dass*** das Verschlusselement (9, 47) mittels des Stellantriebs (17, 40) in dem Antriebsgehäuse (15, 38) axial verschiebbar ist.

3. Ventil (1) nach dem vorgenannten Anspruch, ***dadurch gekennzeichnet, dass*** eine Einlassrichtung des Fluids in die Einlassöffnung (3) einer Auslassrichtung des Fluids aus der Auslassöffnung (5) entspricht und das Verschlusselement (9) koaxial zu der Einlassrichtung und der Auslassrichtung verschiebbar ist.

4. Ventil (1, 32) nach einem der vorgenannten Ansprüche, ***dadurch gekennzeichnet, dass*** das Trennelement (26, 48) ein in einem Ausgleichszylinder (25) frei beweglicher Ausgleichskolben oder ein Faltenbalg ist.

5. Ventil (1) nach dem vorgenannten Anspruch, ***dadurch gekennzeichnet, dass*** der Ausgleichszylinder (25) in einer Wandung des Gehäuses (2) angeordnet ist.

6. Ventil (1, 32) nach einem der vorgenannten Ansprüche, ***dadurch gekennzeichnet, dass*** der Innenraum (20, 45) mit einer Flüssigkeit gefüllt ist.

7. Ventil (1, 32) nach einem der vorgenannten Ansprüche, ***dadurch gekennzeichnet, dass*** der Läufer (19, 41) ein Rotor ist, wobei ein Getriebe eine Rotationsbewegung des Läufers (19, 41) in eine Translationsbewegung einer mit dem Verschlusselement (9, 47) verbundenen Spindel (21, 44) umsetzt.

8. Ventil (1, 32) nach den Ansprüchen 6 und 7, ***dadurch gekennzeichnet, dass*** die Flüssigkeit während der Translationsbewegung der Spindel (21, 44) das Getriebe durchströmt.

9. Ventil (1) nach einem der Ansprüche 7 oder 8, ***dadurch gekennzeichnet, dass*** das Getriebe ein Wälzkörper-Gewindetrieb (18) ist.

10. Ventil (1) nach einem der vorgenannten Ansprüche, ***gekennzeichnet durch*** eine Sicherungseinrichtung, die bei Ausfall der Spannungsversorgung das Verschlusselement (9) in eine Sicherungsposition bewegt.

11. Ventil (1) nach dem vorgenannten Anspruch, ***dadurch gekennzeichnet, dass*** die Sicherungseinrichtung ein elektrisches System ist.

12. Ventil (1) nach einem der vorgenannten Ansprüche, ***gekennzeichnet durch*** eine Positionsanzeige (30), die eine Position des Verschlusselements (9) meldet.

13. Ventil (1, 32) nach einem der vorgenannten Ansprüche, ***dadurch gekennzeichnet, dass*** der Stellantrieb (17, 40) korrosionsbeständig ist.

## Claims

1. A valve (1, 32) comprising a housing (2, 33) that has an inlet opening (3, 34) for a fluid, a closure element (9, 47) by means of which a flow of the fluid can be controlled, and an outlet opening (5, 36) for the fluid, and further comprising an actuating device (8, 37) that has an electrical actuating drive (17, 40) for adjusting a closure cross-section of the closure element (9, 47), and further comprising a drive housing (15, 38) to which a stator (16, 39) of the actuating drive (17, 40) is rigidly connected, wherein a movable element (19, 41) of the actuating drive (17, 40) is kinematically coupled to the closure element (9, 47) in an interior (20, 45) of the drive housing (15, 38), said interior being pressurized by the fluid, and the stator (16, 30) is arranged within the interior (20, 45), **characterized in that** the interior (20, 45) of the drive housing (15, 38) is separated from the fluid by means of a movable separating element (26, 48).

2. The valve (1, 32) according to the preceding claim, **characterized in that** the closure element (9, 47) is axially displaceable in the drive housing (15, 38) by means of the actuating drive (17, 40).

3. The valve (1) according to the preceding claim, **characterized in that** an inlet direction of the fluid into the inlet opening (3) corresponds to an outlet direction of the fluid out of the outlet opening (5), and the closure element (9) can be displaced coaxial to the inlet direction and the outlet direction.

4. The valve (1, 32) according to any one of the preceding claims, **characterized in that** the separating element (26, 48) is a compensation piston or a bellows that is freely movable in a compensation cylinder (25).

5. The valve (1) according to the preceding claim, **characterized in that** the compensation cylinder (25) is arranged in a wall of the housing (2).

6. The valve (1, 32) according to any one of the preceding claims, **characterized in that** the interior (20, 45) is filled with a liquid.

7. The valve (1, 32) according to any one of the preceding claims, **characterized in that** the movable element (19, 41) is a rotor, wherein a transmission converts a rotational movement of the rotor (19, 41) into a translational movement of a spindle (21, 44) connected to the closure element (9, 47).

8. The valve (1, 32) according to the claims 6 and 7, **characterized in that** the liquid flows through the transmission during the translational movement of the spindle (21, 44).

9. The valve (1) according to any one of the claims 7 to 8, **characterized in that** the transmission is a rolling element screw drive (18).

10. The valve (1) according to any one of the preceding claims, **characterized by** a safety device that moves the closure element (9) into a safety position in the event of failure of the power supply.

11. The valve (1) according to the preceding claim, **characterized in that** the safety device is an electrical system.

12. The valve (1) according to any one of the preceding claims, **characterized by** a position indicator (30) that signals a position of the closure element (9).

13. The valve (1, 32) according to any one of the preceding claims, **characterized in that** the actuating drive (17, 40) is corrosion-resistant.

## Revendications

1. Vanne (1, 32) avec un boîtier (2, 33), qui présente une ouverture d'entrée (3, 34) pour un fluide, un élément de fermeture (9, 47) grâce auquel un écoulement du fluide peut être commandé, et une ouverture de sortie (5, 36) pour le fluide, et avec un dispositif de réglage (8, 37) qui présente un servomoteur électrique (17, 40) pour le réglage d'une section de fermeture de l'élément de fermeture (9, 47), et avec un boîtier de servomoteur (15, 38) auquel un stator (16, 39) du servomoteur (17, 40) est relié de manière fixe, moyennant quoi dans un espace intérieur (20, 45) du boîtier de servomoteur (15, 38) qui est soumis à une pression du fluide, un induit mobile (19, 41) du servomoteur (17, 40) est couplé par voie cinématique avec l'élément de fermeture (9, 47) et le stator (16, 39) étant disposé dans l'espace intérieur (20, 45), **caractérisé en ce que** l'espace intérieur (20, 45) du boîtier de servomoteur (15, 38) est séparé du fluide à l'aide d'un élément de séparation mobile (26, 48).

2. Vanne (1, 32) selon la revendication précédente, **caractérisée en ce que** l'élément de fermeture (9, 47) peut être déplacé axialement à l'aide du servomoteur (17, 40) dans le boîtier de servomoteur (15, 38).

3. Vanne (1) selon l'une des revendications précédentes, **caractérisée en ce qu'**une direction d'entrée du fluide dans l'ouverture d'entrée (3) correspond à une direction de sortie du fluide de l'ouverture de sortie (5) et **en ce que** l'élément de fermeture (9) peut être déplacé coaxialement à la direction d'entrée et à la direction de sortie.

4. Vanne (1, 32) selon l'une des revendications précédentes, **caractérisée en ce que** l'élément de séparation (26, 48) est un piston d'équilibrage ou un soufflet pouvant se mouvoir librement dans un cylindre d'équilibrage (25).

5. Vanne (1) selon la revendication précédente, **caractérisée en ce que** le cylindre d'équilibrage (25) est disposé dans une paroi du boîtier (2).

6. Vanne (1, 32) selon l'une des revendications précédentes, **caractérisée en ce que** l'espace intérieur (20, 45) est rempli avec un liquide.

7. Vanne (1, 32) selon l'une des revendications précédentes, **caractérisée en ce que** l'induit (19, 41) est un rotor, un mécanisme d'entraînement convertissant un mouvement de rotation du rotor (19, 41) en un mouvement de translation d'une broche (21, 44) en liaison avec l'élément de fermeture (9, 47).

8. Vanne (1, 32) selon les revendications 6 et 7, **caractérisée en ce que** le liquide afflue à travers le mécanisme d'entraînement pendant le mouvement de translation de la broche (21, 44).

9. Vanne (1) selon l'une des revendications 7 ou 8, **caractérisée en ce que** le mécanisme d'entraînement est un mécanisme d'entraînement fileté à corps de roulement (18).

10. Vanne (1) selon l'une des revendications précédentes, **caractérisée par** un dispositif de sûreté qui déplace l'élément de fermeture (9) dans une position de sûreté en cas de défaillance de l'alimentation en tension.

11. Vanne (1) selon la revendication précédente, **caractérisée en ce que** le dispositif de sûreté est un système électrique.

12. Vanne (1) selon l'une des revendications précédentes, **caractérisée par** un indicateur de position (30) qui signale une position de l'élément de fermeture (9).

13. Vanne (1, 32) selon l'une des revendications précédentes, **caractérisée en ce que** le servomoteur (17, 40) résiste à la corrosion.
